# EUROPÄISCHE PATENTSCHRIFT

(11) **EP 0 429 792 B1**
(45) Veröffentlichungstag und Bekanntmachung des Hinweises auf die Patenterteilung: **24.11.1993**
(21) Anmeldenummer: 90118368.1
(22) Anmeldetag: 25.09.1990
(51) Int. Cl.: B60R 25/06

(54) **Vorrichtung zum Verriegeln des Wählhebels für ein Kraftfahrzeug mit automatischem Getriebe**
Shift lever locking apparatus for a vehicle provided with an automatic gearbox
Dispositif de verrouillage d'un sélecteur de vitesses pour un véhicule équipé d'une boîte de vitesses automatique

(30) Priorität: 01.12.1989 DE 3939748
(43) Veröffentlichungstag der Anmeldung: 05.06.1991
(73) Patentinhaber: AUDI AG, 85045 Ingolstadt (DE)
(72) Erfinder: Heyartz, Rudolf, D-8070 Ingolstadt (DE); Rall, Markus, D-8070 Ingolstadt (DE); Müller, Hugo, D-8859 Ballersdorf (DE); Kersten, Hartmut, D-8070 Ingolstadt (DE); Ott, Dieter, D-8070 Ingolstadt (DE); Bieber, Klaus, D-8074 Gaimersheim (DE); Maier, Josef, D-8071 Hepberg (DE)

(56) Entgegenhaltungen:
- EP-A- 0 315 174
- EP-A- 0 334 672
- US-A- 3 625 032

## Beschreibung

Die Erfindung betrifft eine Vorrichtung zum Verriegeln des Vählhebels in der Parkstellung P für ein Kraftfahrzeug mit automatischem Getriebe, gemäß dem Oberbegriff des Patentanspruches 1.

Eine gattungsgemäße Vorrichtung zeigt die GB-A-2160485. Dort wird der zur Arretierung des Vählhebels vorgesehene Verriegelungsstift durch einen mit dem Seilzug verbunden Hebel verriegelt bzw. blockiert. Der Verriegelungsstift wird dabei über einen Entriegelungsknopf gesteuert, der im Vählhebelgriff verschiebbar angeordnet ist. Diese Vorrichtung ist aber für sogenannte Tauchdruckschaltungen nicht anwendbar, bei denen der Vählhebel zur Überwindung der Parkstellungs-Arretierung axial verschoben wird, wie dies beim Anmeldungsgegenstand der Fall ist.

Aufgabe der Erfindung ist es, eine funktionssichere, baulich einfache und besonders robuste Vorrichtung der gattungsgemäßen Art zu schaffen.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß ist an dem axial verschiebbaren Wählhebel eine Anschlagtasse vorgesehen, die in der Parkstellung des Wählhebels mit einem beweglich gelagerten Hebel zusammenwirkt, der über den Seilzug mit der Sperreinrichtung am Zünd-Lenkschloß des Kraftfahrzeuges verbunden ist. Da der Wählhebel nur durch axiales Verschieben aus der Parkstellung herausschaltbar ist, ist eine einfache Verriegelung über den Hebel gegeben, indem dieser diese Verschiebbarkeit blockiert. Die Auslegung und das Übersetzungsverhältniss können dabei so gewählt werden, daß bei einem Mißbrauch nur geringe Kräfte auf die Vorrichtung ausübbar sind.

Besonders zweckmäßig kann gemäß Patentanspruch 2 der Hebel schwenkbar auf einer Welle gelagert sein, der eine mit der Anschlagtasse zusammenwirkende Exzenterhülse trägt. Durch einen Anschlag innerhalb des Lagerbockes verbleibt dabei die Exzenterhülse und dementsprechend auch der Hebel beim Herausschalten des Wählhebels aus der Parkstellung in der durch das axiale Verschieben des Wählhebels vorgegebenen Position, wodurch Betriebsstörungen im Fahrbetrieb gegebenenfalls durch ungewolltes Verlagern des Hebels, der mit der Sperreinrichtung am Zünd-Lenkschloß verbunden ist, vermieden sind. Die Exzenterhülse wird dabei in der durch den Anschlag bestimmten Position gehalten.

Alternativ kann gemäß den Ansprüchen 3 und 4 der Hebel als verschiebbarer Verriegelungsstift ausgeführt sein, der über das Zündschloß und den Seilzug unter die Anschlagtasse des Wählhebels verschiebbar ist und somit den Wählhebel in der P-Stellung verriegelt. Der Vorteil liegt hier ebenfalls in der baulich einfachen Ausführung und einer zuverlässigen Konstruktion.

Zwei Ausführungsbeispiele der Erfindung sind im folgenden mit weiteren Einzelheiten näher erläutert. Die schematische Zeichnung zeigt in
- **Fig. 1**: Die Vorrichtung an einem Kraftfahrzeug mit einem teilweise dargestellten Zünd-Lenkschloß und einer Wählhebeleinrichtung für ein automatisches Getriebe mit einer Vorrichtung zum Verriegeln des Wählhebels in der Parkstellung;
- **Fig. 2**: einen Schnitt II-II der Fig. 1 durch die Wählhebeleinrichtung;
- **Fig. 3**: einen Schnitt entlang der Linie III-III der Fig. 1;
- **Fig. 4**: eine Ansicht X auf die Wählhebeleinrichtung mit der Schaltkulisse für den Wählhebel;
- **Fig. 5**: eine Vorrichtung wie in Fig. 1, jedoch mit einem auf den Wählhebel wirkenden Verriegelungsstift; und
- **Fig. 6**: eine Draufsicht auf den Verriegelungsstift an der Anschlagtasse des Wählhebels mit einer Klappe als Anschlagteil.

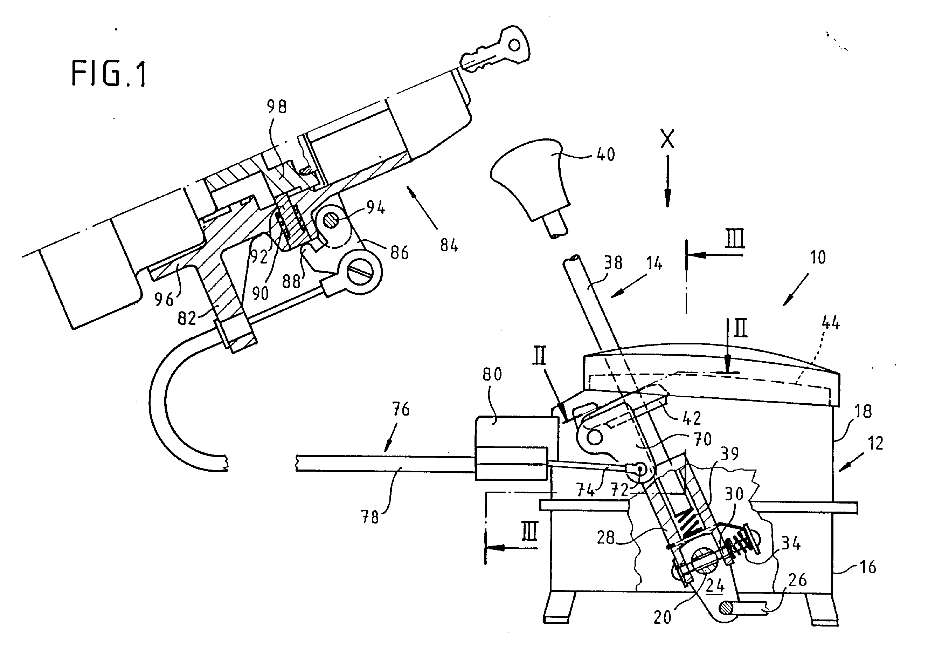

In den Figuren 1 - 4 ist mit 10 eine Wählhebeleinrichtung bezeichnet, die sich im wesentlichen aus einem Lagerbock 12 und einem darin schwenkbar gelagerten Wählhebel 14 zusammensetzt. Der Lagerbock 12 besteht aus einem Basisteil 16, welches in nicht dargestellter Weise am Boden des Kraftfahrzeuges angeschraubt ist. Auf das Basisteil 16 aufgesetzt ist ein kappenförmiges Kulissenteil 18 aus Kunststoff, welches mit dem Basisteil 16 verschraubt ist.

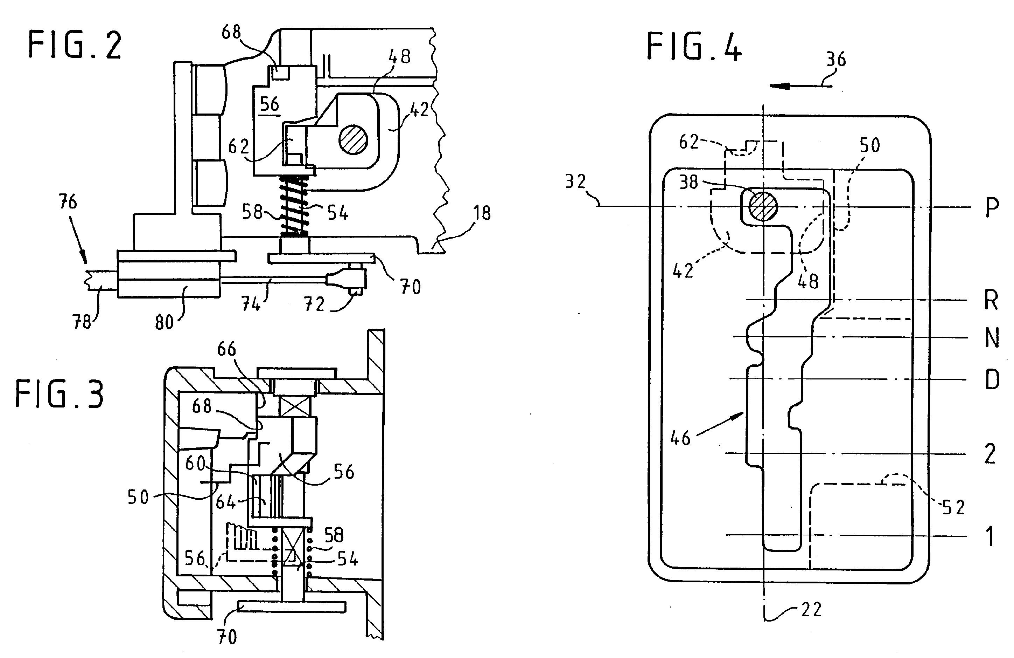

Der Wählhebel 14 ist über eine Welle 20 in dem Basisteil 16 in einer im folgenden als Schaltebene bezeichneten Ebene 22 schwenkbar gelagert. Die Welle 20, die die Längswände des Basisteiles 16 durchdringt, trägt einen ersten Hebel 24, an den ein mit dem automatischen Getriebe verbundenes Steuergestänge 26 angelenkt ist. Auf die Welle 20 innerhalb des Basisteiles 16 ist ein gabelförmig endendes Führungsteil 28 aufgesetzt, das um einen Bolzen 30 in einer im folgenden als Vorwählebene bezeichneten Ebene 32 schwenkbar ist. Der Bolzen 30 durchdringt dabei die Welle 20 und die frei abragenden Schenkel des Führungsteiles 28. Auf dem Bolzen 30 ist ferner eine Schenkelfeder 34 gelagert, die sich einenends am Bolzen 20 und andernends an dem Führungsteil 28 abstützt und dabei ein Drehmoment auf das Führungsteil 28 ausübt, welches eine Vorspannung auf den oberen Wählhebelabschnitt in Richtung des Pfeiles 36 (Fig.4) ergibt.

In dem Führungsteil 28 des Wählhebels 14 ist die Wählhebelstange 38 axial verschiebbar geführt und mittels einer in dem Führungsteil 28 abgestützten Schraubendruckfeder 39 nach oben vorgespannt. Die Wählhebelstange 38 trägt einen ergonomisch geformten Schaltgriff 40. Nach oben abgestützt ist die Wählhebelstange 38 über eine Anschlagtasse 42, die an der Wählhebelstange 38 unverschiebbar befestigt ist und die sich an Führungsflächen 44 in dem Kulissenteil 18 abstützt. Die Führungsflächen an dem Kulissenteil und an der Anschlagtasse sind entsprechend dem Schwenkweg des Wählhebels 14 sphärisch geformt. Wie aus der Zeichnung Fig. 1 ersichtlich ist, kann die Wählhebelstange 38 in dem Führungsteil 28 axial entgegen der Vorspannkraft der Schraubendruckfeder verschoben werden.

Die Fig. 4 zeigt die Schaltkulisse 46 in dem Kulissenteil 18. In der gezeichneten Anordnung befindet sich der Wählhebel 14 in der Parkstellung, die durch einen L-förmig endenden Bereich der Schaltkulisse 46 gebildet ist. Soll aus dieser Parkstellung P herausgeschaltet werden, so ist der Wählhebel 14 bzw. das Führungsteil 28 mit der Wählhebelstange 38 entgegen der Vorspannkraft der Schenkelfeder 34 nach rechts zu verschwenken, um in den eine Schwenkbewegung in der Schaltebene zulassenden Bereich der Schaltkulisse 46 zu gelangen. Diese Schwenkbewegung ist jedoch nur möglich, wenn die Wählhebelstange 38 vorab axial nach unten verschoben wird, weil dann eine Anschlagfläche 48 der Anschlagtasse 42 unter einen in dem Kulissenteil 18 in dessen Seitenwand ausgebildeten Anschlag 50 (vergl. Fig. 3 und 4) gleiten kann. Der Anschlag 50 erstreckt sich bis zu der Wählhebelstellung R (Rückwärtsgang), ein weiterer Anschlag 52 ist dann wirksam, wenn in den ersten Gang 1 geschaltet werden soll. Die Wählhebelstellungenen N (Neutral), D und 2 sind ohne axiales Verschieben der Wählhebelstange 38 zum Führungsteil 28 schaltbar. Die in der Schaltkulisse 46 vorgesehenen Vertiefungen bzw. Erhebungen bilden Arretierungen für die einzelnen Wählhebelstellungen.

In dem Kulissenteil 18 ist eine Welle 54 drehbar gelagert, auf der innerhalb des Kulissenteiles 18 eine Exzenterhülse 56 verschiebbar aufgenommen ist. Um eine Formschlüssigkeit in Drehrichtung zwischen der Exzenterhülse 56 und der Welle 54 sicherzustellen, ist die Welle 54 im Verschiebebereich als ein Vierkant mit entsprechenden Schlüsselflächen ausgebildet, auf denen die Exzenterhülse mit entsprechenden Lagerflächen geführt ist. Mittels einer Schraubendruckfeder 58 ist die Exzenterhülse 56 entgegen der Vorspannkraft durch die Schenkelfeder 34 am Wählhebel 14 vorgespannt.

Die Exzenterhülse 56 ist mit einer Ausnehmung 60 versehen, in die ein nach vorne ragender Abschnitt 62 der Anschlagtasse 42 in der Parkstellung des Wählhebels 14 einragt. Dabei wirkt dieser Abschnitt 62 auf eine außerhalb der Mittelachse der Welle 54 liegende Anschlagfläche 64 der Exzenterhülse 56, so daß bei einem nach unten Drücken der Wählhebelstange 38 die Exzenterhülse 56 und mit ihr die Welle 54 verschwenkt bzw. verdreht wird. In der niedergedrückten Posititon der Wählhebelstange 38 und bei gleichzeitigem Verschwenken in die Schaltebene kann die Exzenterhülse 56 bzw. eine daran angeformte Anschlagfläche 68 unter einen Anschlag 66 am Kulissenteil 18 gleiten und wird dann in dieser Position unverdrehbar gehalten. In der Fig. 3 der Zeichnung ist in gestrichelten Linien die Position der Exzenterhülse 56 in der Parkstellung P des Wählhebels 14 und in ausgezogenen Linien in der Position dargestellt, in der der Wählhebel aus der Parkstellung P herausgeschaltet eine andere Wählhebelstellung (z. B.N) einnimmt. Das seitliche Verschieben der Exzenterhülse 56 wird durch das gabelförmig formschlüssige Umfassen des Abschnittes 62 der Anschlagtasse 42 des Wählhebels 14 erreicht.

Außerhalb des Kulissenteiles 18 ist an dem einen freien Ende der Welle 54 ein Hebel 70 befestigt, an dem über eine Bolzenverbindung 72 ein Zug- und Druckkräfte übertragendes Seil 74 angelenkt ist. Das Seil 74 ist Bestandteil eines Seilzuges 76 mit einer das Seil 74 umgebenden Hülse 78, die einerseits über eine Aufnahme 80 am Lagerbock 12 der Wählhebeleinrichtung und andererseits an einem Arm 82 des Zünd-Lenkschlosses 84 des Kraftfahrzeuges befestigt ist. Das Seil 74 ist andernends an einem zweiarmigen Hebel 86 angelenkt, dessen freier Arm 88 auf einen durch eine Schraubendruckfeder 90 vorgespannten Sperrstift 92 wirkt. Der Hebel 86 ist auf einem gehäusefesten Bolzen 94 drehbar gelagert. In dem Gehäuse 96 des Zünd-Lenkschlosses 84 ist eine Nockenscheibe 98 drehbar gelagert, die mit dem nicht dargestellten Schloßzylinder des Zünd-Lenkschlosses 84 verbunden ist. In der Nockenscheibe 98 ist eine in der gezeichneten Darstellung nicht ersichtliche Ausnehmung vorgesehen, in die der Sperrstift 92 in der Betriebsstellung des Zünd-Lenkschlosses einfahren kann.

Im folgenden ist die Funktion der vorbeschriebenen Vorrichtung erläutert. Es sei angenommen, der Wählhebel 14 befindet sich in der Park-stellung P und das Zünd-Lenkschloß 84 des Kraftfahrzeuges in der Außerbetriebsstellung. Dies heißt, daß die Sperreinrichtung am Zünd-Lenkschloß 84 die gezeichnete Position einnimmt, in der über die Nockenscheibe 98, den Sperrstift 92, den Sperrhebel 86, den Seilzug 76, den Hebel 70 und die Welle 54 die Exzenterhülse 56 unverdrehbar gehalten ist. Die Exzenterhülse 56 befindet sich in der in der Fig. 3 gestrichelt dargestellten Position. Der an der Anschlagfläche 64 anliegende Abschnitt 62 der Anschlagtasse 42 verriegelt somit die Wählhebelstange 38 derart, daß diese nicht axial verschiebbar ist. Die Anschlagfläche 48 der Anschlagtasse 42 liegt an dem Anschlag 50 des Kulissenteiles 18 an, so daß der obere Wählhebelabschnitt mit dem Führungsteil 28 und der Wählhebelstange 38 nicht nach rechts verschwenkt werden kann.

Wird nunmehr das Zünd-Lenkschloß 84 in die Betriebsstellung geschaltet, wobei der Schloßzylinder mit der Nockenscheibe 98 entsprechend verdreht wird, so gerät die nicht dargestellte Ausnehmung in der Nockenscheibe 98 in den Bereich des Sperrstiftes 92. Dadurch ist die über den Seilzug 76 bewirkte Sperre aufgehoben und es kann aus der Wählhebelstellung P geschaltet werden. Durch das axiale Verschieben der Wählhebelstange 38 wird über den Abschnitt 62 der Anschlagtasse 42 die Exzenterhülse 56 verschwenkt und anschließend durch das nach rechts Verschwenken der Wählhebelstange 38 in der Vorwählebene 32 nach rechts verschoben und mit deren Anschlagfläche 68 mit dem Anschlag 66 am Kulissenteil 18 in Wirkverbindung gebracht. Dies bedeutet, daß beim anschließenden Schalten jeder beliebigen Wählhebelstellung (außer P) die Exzenterhülse 56 in der in der Fig. 3 in ausgezogenen Linien dargestellten Position verbleibt. Bei dem vorangegangenen Verschwenken der Exzenterhülse 56 wird der Hebel 70 in eine Position verstellt, in der über den Seilzug 76 der Sperrhebel 86 den Sperrstift 92 in die nicht dargestellten Ausnehmung der Nockenscheibe 98 einfährt. Dadurch ist die an dem Zünd-Lenkschloß 84 angeordnete und beschriebene Sperreinrichtung aktiviert, so daß nunmehr das Zünd-Lenkschloß 84 nicht in die auf der Zeichnung dargestellte Außerbetriebstellung schaltbar ist. Dies ist erst dann wieder möglich, wenn der Wählhebel 14 in die Parkstellung P zurückgeschaltet wird, wobei der Abschnitt 62 der Anschlagtasse 42 wieder in die Ausnehmung 60 einfährt und beim anschließenden nach links Verschwenken in der Vorwählebene 32 die Exzenterhülse 56 in die gestrichelt dargestellte Position (Fig.3) zurückgestellt wird.

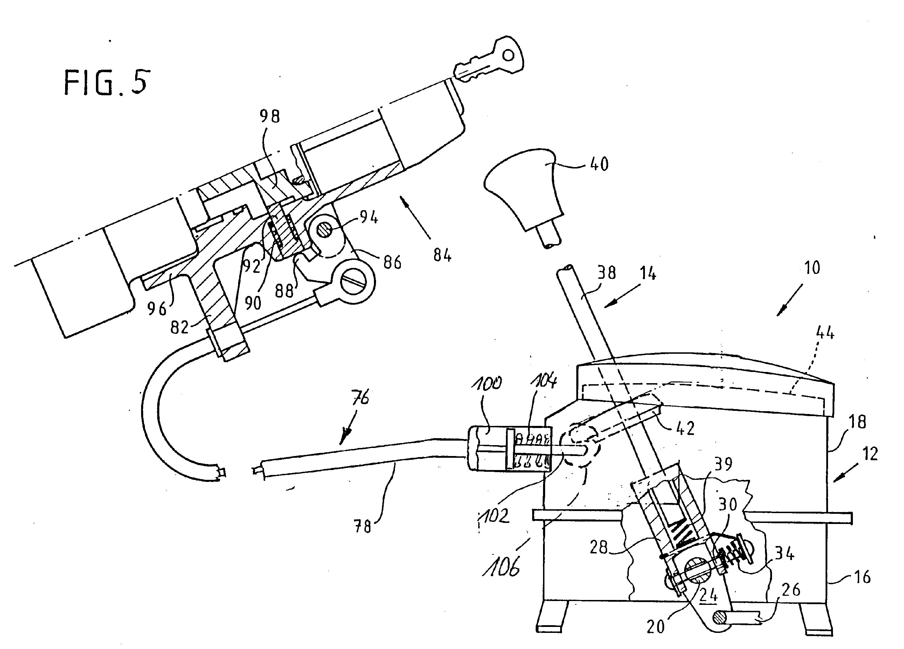

In der Fig. 5 ist eine überwiegend gleiche Vorrichtung gezeigt; gleiche Teile sind deshalb mit den gleichen Bezugszeichen versehen und nicht nochmals beschrieben.

Alternativ zu den Fig.1 - 4 ist jedoch an den Lagerbock 12 ein Gehäuse 100 angebaut in dem ein verschiebbar geführter Verriegelungsstift 102 angeordnet ist. Der Verriegelungsstift 102 ist mit dem Seilzug 76 verbunden und durch eine im Gehäuse 100 abgestützte Feder 104 in Entriegelungsstellung vorgespannt. Das Gehäuse 100 mit dem Verriegelungsstift 102 ist so am Schaltbock 12 angeordnet, daß der Verriegelungsstift 102 bei in Außerbetriebsstellung befindlichen Zündschloß 84 unter der Anschlagtasse 42 liegt und damit den Wählhebel 24 in der P-Stellung verriegelt (gezeichnete Position). Wird die Zündung eingeschaltet, so kann der Verriegelungsstift 102 betätigt durch die Vorspannkraft der Feder 104 und durch das Verdrehen der Nockenscheibe 92 zurückgleiten, wodurch der Wählhebel 14 freigegeben ist.

Ferner ist in der einen Seitenwand des Lagerbockes 12 ein federnd vorgespannter, verschiebbar geführter Anschlagstift 106 (gestrichelt dargestellt) angeordnet, der beim Herausschalten des Wählhebels 14 aus der P-Stellung (Wählhebel wird zunächst seitwärts geschwenkt - vgl. Fig. 4) in den Verschiebeweg des Verriegelungsstiftes 102 einfährt (senkrecht zur Zeichenebene), wodurch nunmehr das Zündschloß 84 nicht mehr in die Außenbetriebsstellung geschaltet werden kann, in der der Zündschlüssel abziehbar ist.

Erst wenn der Wählhebel 14 wieder in die P-Stellung bewegt wird, wobei die Anschlagtasse 42 den Anschlagstift 106 in Richtung der Seitenwand (linke Seitenwand in der Zeichnung Fig.4) zurückschiebt, ist der Weg zum Ausfahren des Verriegelungsstiftes 102 wieder frei.

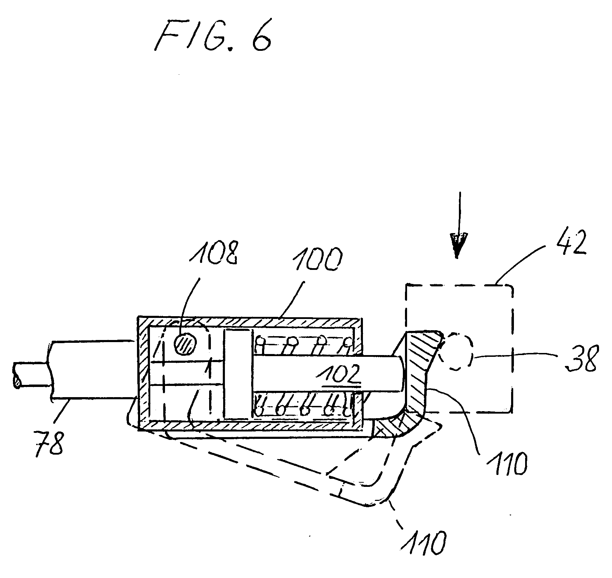

Anstelle des Anschlagstiftes 106 kann auch - wie in der Fig. 6 gezeigt - ein Anschlagteil in Form einer schwenkbar über eine Achse 108 an dem Gehäuse 100 angelenkten Klappe 110 vorgesehen sein, die unter Federverspannung (z. B. durch eine nicht dargestellte Schenkelfeder) steht und in der Entriegelungsstellung des Verriegelungstiftes 102 dessen "Ausfahren" sperrt. Die Klappe 110 wird ebenfalls durch die Anschlagtasse 42 aus dem Verschiebebereich des Verriegelungsstiftes 12 herausgeschwenkt (gestrichtelt dargestellt), wenn der Wählhebel in die P-Stellung geschaltet wird.

## Patentansprüche

1. Vorrichtung zum Verriegeln des Wählhebels (14) in der Parkstellung P für ein Kraftfahrzeug mit automatischem Getriebe, wobei die Vorrichtung ein beweglich am Wählhebel-Lagerbock (12) angeordnetes und den Wählhebel (14) verriegelndes Riegelelement (56;102) aufweist, welches über einen Seilzug (76) mit einer Sperreinrichtung (92) am Zünd-Lenkschloß des Kraftfahrzeuges verbunden ist und mit der Sperreinrichtung derart zusammenwirkt, daß der Zündschlüssel nur bei eingelegter P-Stellung des Wählhebels (14) abziehbar und ein Entriegeln des Wählhebels (14) in der P-Stellung nur bei in Fahrtstellung befindlichem Zündschloß (84) ermöglicht ist, **gekennzeichnet durch** die folgenden Merkmale:
- der Wählhebel (14) ist axial verschiebbar und kardanisch schwenkbar im Wählhebel-Lagerbock (12) gelagert;
- im Lagerbock (12) ist ein Anschlag (50) für den Wählhebel (14) in der Parkstellung P vorgesehen, der durch axiales Verschieben des Wählhebels (14) überwindbar ist, wobei
- der Anschlag (50) mit einer Anschlagtasse (42) am Wählhebel (14) zusammenwirkt;
- das mit dem Seilzug (76) verbundene Riegelele ment (56;102) untergreift in der Parkstellung P des Wählhebels (14) die Anschlagtasse 42, und
- es ist ein weiteres Anschlagelement (66;106;110) im Lagerbock (12) vorgesehen, welches mit der Anschlagtasse (42) zusammenwirkt und bei einem Herausschalten des Wählhebels (14) aus der P-Stellung das Riegelelement (56,102) in der Entriegelungsstellung hält und beim Schalten in die P-Stellung wieder freigibt.

2. Vorrichtung nach Anspruch 1, **dadurch gekennzeichnet,** daß
- das Riegelelement durch eine Exzenterhülse (56) gebildet ist, die
- auf einer im Lagerbock (12) angeordneten Welle (54) unverdrehbar, jedoch axial verschiebbar ge lagert ist,
- wobei die Welle (54) einen mit dem Seilzug (76) verbundenen Hebel (70) trägt,
- die Anschlagtasse (42) in der Parkstellung P des Wählhebels (14) von der Exzenterhülse (56) gabelförmig formschlüssig umfaßt ist,
- die Anschlagtasse (42) bei axialem Verschieben des Wählhebels (14) die Exzenterhülse (56) ver dreht und bei seitlichem Schwenken in einer Ebe ne (32) senkrecht zur Schaltebene (22) ver schiebt;
- am Lagerbock (12) als Anschlagelement ein wei terer Anschlag (66) vorgesehen ist, der die Ex zenterhülse (56) in der beim Herausschalten des Wählhebels (14) aus der Parkstellung P befind lichen Position unverdrehbar hält, wobei
- der Wählhebel (14) durch eine erste Feder (34) entgegen der Schwenkrichtung beim Herausschalten aus der Parkstellung P vorgespannt ist und
- eine zweite Feder (58) die Exzenterhülse (56) in diese Schwenkrichtung vorspannt, wobei die Kraft der ersten Feder (34) die der zweiten Feder (58) überwiegt.

3. Vorrichtung nach Anspruch 1, **dadurch gekennzeichnet,** daß
- das Riegelelement durch einen verschiebbar ge führten Verriegelungsstift (102) gebildet ist,
- der durch die Kraft einer Feder (104) in die Entriegelungsstellung vorgespannt ist,
- wobei das Anschlagelement (106;110) unmittelbar auf den Verriegelungsstift (102) wirkt.

4. Vorrichtung nach Anspruch 3, **dadurch gekennzeichnet,** daß das Anschlagelement eine schwenkbar an dem Gehäuse (100) des Verriegelungstiftes (102) gelagerte Klappe (110) ist.

## Claims

1. Device for locking the transmission selector lever (14) in the parking position P for a motor vehicle with automatic transmission, said device having an interlock element (56;102) which is disposed movably on the selector-lever bearing bracket (12) and locks the selector lever (14), and which is connected via a cable (76) to a locking device (92) on the ignition/steering lock of the motor vehicle and cooperates with the locking device in such a way that the ignition key can only be withdrawn when the selector lever (14) is in position P and it is only possible for the selector lever (14) to be released from position P when the ignition lock (84) is in the driving position, characterised by the following features:
- the selector lever (14) can be displaced axially and is gimbal-mounted in the selector-lever bearing bracket (12);
- a limit stop (50) is provided in the bearing bracket (12) for the selector lever (14) in the parking position P and can be overcome by axial displacement of the selector lever (14), said limit stop (50) cooperating with a limit stop cup (42) on the selector lever (14);
- the interlock element (56; 102) connected to the cable (76) engages the limit stop cup (42) from below when the selector lever (14) is in the parking position P, and
- provided in the bearing bracket (12) is a further limit stop element (66; 106; 100) which cooperates with the limit stop cup (42) and holds the interlock element (56, 102) in the release position when the selector lever (14) is being shifted out of position P and clears said interlock element again when position P is engaged.

2. Device according to claim 1, characterised in that
- the interlock element is constituted by an eccentric sleeve (56) which
- is mounted on a shaft (54) disposed in the bearing bracket (12) so as to be locked against rotation yet axially displaceable,
- the shaft (54) carrying a lever (70) connected to the cable (76),
- the limit stop cup (42) being positively embraced in the shape of a fork by the eccentric sleeve (56) when the selector lever (14) is in the parking position P,
- the limit stop cup (42) twisting the eccentric sleeve (56) when the selector lever (14) is displaced axially and displacing it perpendicular to the gear shift plane (22) when said lever (14) is swivelled laterally in one plane (32);
- a further limit stop (66) being provided on the bearing bracket (12) as a stop element and holding the eccentric sleeve (56) non-rotatably in the position in which the selector lever (14) is to be found as it is being shifted out of the parking position P,
- the selector lever (14) being biased by a first spring (34) in the opposite direction to the direction of swivel as it is being shifted out of the parking position P and
- a second spring (58) biasing the eccentric sleeve (56) into said swivel direction, the force of the first spring (34) prevailing over that of the second spring (58).

3. Device according to claim 1, characterised in that
- the interlock element is constituted by a displaceable latch pin (102),
- which pin is biased into the release position by the force of a spring (104),
- the limit stop element (106; 110) acting directly on the latch pin (102).

4. Device according to claim 3, characterised in that the limit stop element is a flap (110) swivel-mounted on the casing (100) of the latch pin (102).

## Revendications

1. Dispositif pour le verrouillage du levier de sélection (14) dans la position de stationnement P pour un véhicule automobile équipé d'une boîte de vitesses automatique, le dispositif comportant un élément de verrouillage (56; 102) qui est monté mobile sur le palier support (12) du levier de sélection, verrouille le levier de sélection (14), est relié par un câble sous gaine (76) à un dispositif de blocage (92) au niveau de la serrure de contact et d'anti-vol sur la direction du véhicule et coopère avec ce dispositif de blocage de telle sorte que la clé de contact ne puisse être extraite que dans la position P du levier de sélection (14) et qu'un déverrouillage du levier de sélection (14) en position P ne soit possible que quand la serrure de contact (84) se trouve en position de marche, caractérisé par les caractéristiques suivantes:
- le levier de sélection (14) est monté dans le palier support de levier de sélection (12) de façon à pouvoir effectuer un mouvement de déplacement axial et un mouvement pivotant à la Cardan;
- dans le palier support (12), il est prévu, pour le levier de sélection (14) dans la position de stationnement P, une butée (50) qui peut être franchie par déplacement axial du levier de sélection (14);
- la butée (50) coopère avec une couronne d'arrêt (42) sur le levier de sélection (14);
- l'élement de verrouillage (56; 102) raccordé au câble sous gaine (76) saisit par-dessous la couronne d'arrêt (42) dans la position de stationnement P du levier de sélection (14); et
- il est prévu, dans le palier support (12), un autre élément de butée (66; 106; 110) qui coopère avec la couronne d'arrêt (42) et qui maintient l'élément de verrouillage (56; 102) dans la position de déverrouillage lorsque le levier de sélection (14) est placé hors de la position P et le libère lorsque le levier est placé dans la position P.

2. Dispositif selon la revendication 1, caractérisé en ce que
- l'élément de verrouillage est constitué par une douille excentrique (56) qui
- est montée sans possibilité de rotation, mais de façon déplaçable axialement sur un arbre (54) disposé dans le palier support (12),
- l'arbre (54) portant un levier (70) raccordé au câble sous gaine (76);
- dans la position de stationnement P du levier de sélection (14), la couronne d'arrêt (42) est enserrée à la manière d'une fourchette et bloquée par la douille excentrique (56);
- la couronne d'arrêt (42) fait tourner la douille excentrique (56) lorsque le levier de sélection (14) est déplacé axialement et elle la déplace en cas de pivotement latéral dans un plan (32) perpendiculaire au plan de sélection (22);
- sur le palier support (12), il est prévu, en tant qu'élément de butée, une autre butée (66) qui immobilise la douille excentrique (56) sans possibilité de rotation dans la position où elle se trouve lorsque le levier de sélection (14) est placé hors de la position de stationnement P,
- le levier de sélection (14) étant précontraint par un premier ressort (34) en sens inverse du sens de pivotement lorsqu'il est placé hors de la position de stationnement P et
- un second ressort (58) précontraignant la douille excentrique (56) dans ce sens de pivotement, la force du premier ressort (34) étant supérieure à celle du second ressort (58).

3. Dispositif selon la revendication 1, caractérisé en ce que
- l'élément de verrouillage est constitué par une broche de verrouillage (102) déplaçable de façon guidée,
- qui est précontrainte dans la position de déverrouillage par la force d'un ressort (104),
- l'élément de butée (106; 110) agissant directement sur la broche de verrouillage (102).

4. Dispositif selon la revendication 3, caractérisé en ce que l'élément de butée est un volet (110) monté pivotant sur le boîtier-guide (100) de la broche de verrouillage (102).
